# FASCICULE DE BREVET EUROPEEN

(11) **EP 3 559 759 B1**
(45) Date de publication et mention de la délivrance du brevet: **07.10.2020**
(21) Numéro de dépôt: 17823101.5
(22) Date de dépôt: 19.12.2017
(51) Int. Cl.: G04B 37/22

(54) **COMPOSANT HORLOGER EN MATÉRIAU COMPOSITE**
UHRWERKSKOMPONENTE AUS VERBUNDWERKSTOFF
TIMEPIECE COMPONENT MADE OF COMPOSITE MATERIAL

(30) Priorité: 20.12.2016 EP 16205356
(43) Date de publication de la demande: 30.10.2019
(73) Titulaire: The Swatch Group Research and Development Ltd, 2074 Marin (CH)
(72) Inventeur: FRANÇOIS, Nicolas, 2000 Neuchâtel (CH); KISSLING, Gregory, 2532 Macolin (CH); BOURBAN, Stewes, 1589 Chabrey (CH); MULLER, Juliette, 2520 La Neuveville (CH); BAZIN, Jean-Luc, 2512 Tüscherz-Alfermée (CH)
(74) Mandataire: ICB SA
(86) Numéro de dépôt international: PCT/EP2017/083639
(87) Numéro de publication internationale: WO 2018/115009

(56) Documents cités:
- EP-A2- 2 784 600
- JP-A- 2008 020 265
- US-A1- 2005 127 782
- US-A1- 2009 085 426
- HANNA BRANDON H ET AL: "Mechanical Property Measurement of Carbon Infiltrated Carbon Nanotube Structures for Compliant Micromechanisms", JOURNAL OF MICROELECTROMECHANICAL SYSTEMS, IEEE SERVICE CENTER, US, vol. 23, no. 6, 1 décembre 2014 (2014-12-01), pages 1330-1339, XP011565571, ISSN: 1057-7157, DOI: 10.1109/JMEMS.2014.2312847 [extrait le 2014-11-25]
- HUTCHISON D N ET AL: "Carbon Nanotubes as a Framework for High-Aspect-Ratio MEMS Fabrication", JOURNAL OF MICROELECTROMECHANICAL SYSTEMS, IEEE SERVICE CENTER, US, vol. 19, no. 1, 1 février 2010 (2010-02-01), pages 75-82, XP011298225, ISSN: 1057-7157

## Description

### Domaine de l'invention

L'invention se rapporte à un composant horloger en matériau composite, notamment une carrure, une lunette ou encore un cadran, le matériau composite présentant un renfort en nid d'abeille dans lequel est injecté une résine par exemple thermodurcissable.

La présente invention concerne également un procédé de fabrication du composant horloger.

### Arrière-plan de l'invention

Il est connu de l'art antérieur, et notamment de l'aéronautique, les pièces fabriquées à partir de panneaux sandwich en matériau composite obtenus en plaçant des nappes ou des tissus de fibres imprégnées de résine sur chacune des deux faces d'une âme à cellules ouvertes le plus souvent constituée par une structure en nid d'abeille.

En raison de leurs bonnes caractéristiques mécaniques, les panneaux sandwich en matériau composite sont utilisés dans de nombreux domaines, et notamment l'aéronautique où est particulièrement apprécié la combinaison de la légèreté et des bonnes propriétés mécaniques.

Cependant, les panneaux sandwich en matériau composite actuels ne sont pas adaptables aux pièces d'horlogerie et ne permettent pas la réalisation de petites pièces esthétiques avec des formes concaves ou convexes. Ils sont également sensibles à l'usure et aux rayures.

Le document JP 2008 020265 A décrit un élément d'habillage d'une pièce d'horlogerie en matériau composite comprenant au moins un renfort et une matrice, le renfort présentant une structure en nid d'abeille en trois dimensions avec une pluralité d'alvéoles dans lesquelles est injectée la matrice.

Le document US 2009/085426 A1 décrit un composant d'un système MEMS, ce composant étant en matériau composite comprenant au moins un renfort et une matrice, le renfort présentant une structure en nid d'abeille en trois dimensions avec une pluralité d'alvéoles dans lesquelles est injectée la matrice. De plus, ce document dévoile que le matériau composite peut être utilisé pour la réalisation de structures MEMS, parmi lesquelles, des actuateurs à peignes ("comb drivers"). Ces actuateurs sont bien connus en horlogerie et utilisés pour l'entraînement de roues horlogères, comme le montre, par exemple, le document US 2005/127782 A1.

### Résumé de l'invention

L'invention a notamment pour objectif de pallier aux différents inconvénients de ces techniques connues.

Plus précisément, un objectif de l'invention est de fournir des composants d'horlogerie réalisés en un matériau composite présentant des propriétés mécaniques satisfaisantes, notamment une bonne résistance aux chocs, griffures et rayures, tout en conservant un aspect esthétique attrayant.

Ces objectifs, ainsi que d'autres qui apparaîtront plus clairement par la suite, sont atteints selon l'invention à l'aide d'un composant horloger tel que défini dans la revendication indépendante 1. Des réalisations préférées sont définies dans les revendications dépendantes 2 à 7.

L'invention concerne également un procédé de fabrication d'un élément d'habillage, ce procédé étant défini dans la revendication indépendante 8. Des réalisations préférées sont définies dans les revendications dépendantes 9 à 12.

### Description sommaire des dessins

D'autres caractéristiques et avantages de l'invention apparaîtront plus clairement à la lecture de la description suivante d'un mode de réalisation particulier de l'invention, donné à titre de simple exemple illustratif et non limitatif, et des figures annexées, parmi lesquelles :
- les figures 1a et 1b sont des vues en perspective de la réalisation d'une structure nid d'abeille ;
- les figures 2a et 2b sont respectivement des photos d'une boîte de montre et de son fond en matériau composite conforme à l'invention.

### Description détaillée des modes de réalisation préférés

L'invention concerne les composants horlogers, tels que la carrure, le fond, la lunette ou encore le cadran ou des maillons de bracelet, réalisés en un matériau composite particulier.

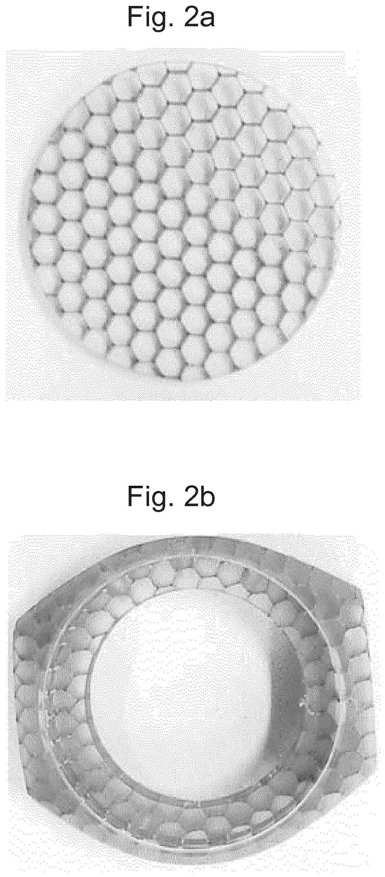

Tel qu'illustré à la figure 2a, le composant horloger en matériau composite selon l'invention comprend au moins un renfort et une matrice, le renfort présentant une structure en nid d'abeille en trois dimensions avec une pluralité de cellules, préférentiellement de forme hexagonale, et dans lesquelles est injectée la matrice. Bien évidemment, l'homme du métier pourrait envisager d'autres formes de cellules en fonction de ses besoins.

Selon l'invention, la structure nid d'abeille formant le renfort peut être réalisée au moyen d'un matériau choisi parmi les fibres synthétiques ou les fibres naturelles.

Il existe une large variété de fibres synthétiques, dans le cadre de l'invention, les fibres peuvent être choisies parmi celles-ci : les fibres de carbone, les fibres de verre, les fibres en carbure de silice, les fibres en polyéthylène de masse molaire très élevée (UHMWPE) comme le Dyneema®, les fibres de Vectran®, les fibres de quartz comme le Quartzel®, les fibres d'aramide, les fibres de carbure de silicium comme le Nicalon®, ou encore des fibres en polytéréphtalate d'éthylène (PET).

Selon une alternative de l'invention, les fibres peuvent être d'origine naturelle telles que les fibres de lin ou les fibres cellulosiques.

Selon un autre mode de réalisation de l'invention, la structure nid d'abeille du renfort peut être réalisée au moyen de matériaux métalliques, de céramiques, ou encore de thermoplastiques.

Par exemple, la structure nid d'abeille peut être réalisée en titane, un tel métal a pour avantage d'avoir d'excellentes caractéristiques d'amortissement et de résistance à la fatigue. Une fois formée, la structure nid d'abeille obtenue combine légèreté, grande résistance et bonnes propriétés d'amortissement des chocs.

Bien évidemment d'autres métaux ou alliages peuvent être utilisés, comme de l'or, du titane, du cuivre, ou encore de l'aluminium. Les métaux amorphes ou partiellement amorphes sont également envisageables.

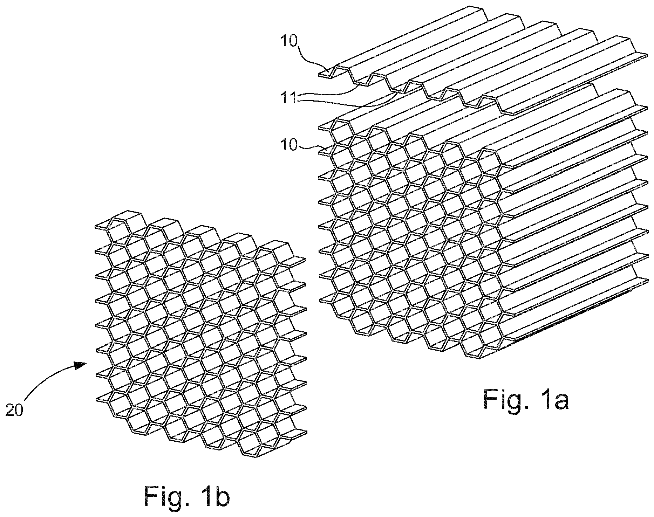

Pour réaliser la structure nid d'abeille on peut utiliser des feuilles cannelées, par exemple des feuilles minces métalliques ou encore des nappes de fibres pré-imprégnées. Les feuilles cannelées 10 sont superposées et collées ou soudées le long de leurs facettes 11 en contact mutuel, comme illustré à la figure 1a. Des panneaux en nid d'abeille 20 sont directement obtenus par découpe du bloc de feuilles perpendiculairement aux cannelures, comme illustré à la figure 1b.

Il peut aussi être utilisé des bandelettes métalliques ou composites qui sont cannelées par emboutissage puis collées entre elles.

La structure nid d'abeille peut aussi être réalisée par impression 3D (technologie frittage de poudres métalliques) ou usinage (fraisage, laser, jet d'eau) de plaques composites/métalliques. On peut aussi envisager un procédé d'extrusion de profilé avec une filière ayant la forme de nid d'abeille, de manière à donner la bonne forme au renfort nid d'abeille, celui-ci peut-être ré-usiné.

Selon l'invention, les cellules de la structure nid d'abeille ont une hauteur comprise entre 0.5 mm et 2 mm, et un bord présentant une longueur comprise de préférence entre 0.5 mm et 2 mm, et plus préférentiellement entre 0.5 mm et 0.8 mm. Bien évidemment, les dimensions des cellules hexagonales peuvent varier en fonction du type de composants horlogers que l'on souhaite réaliser. Par exemple, pour réaliser un fond de boîte une hauteur moindre sera nécessaire comparé à la hauteur nécessaire pour réaliser une carrure. On pourra également faire varier la longueur du bord de la cellule en fonction de la densité de cellules souhaitée.

Selon les besoins de l'homme du métier, et notamment pour l'obtention de propriétés particulières, la structure nid d'abeille peut être réalisée à partir d'une combinaison de fibres de matières différentes. Par exemple, des fibres de carbone et des fibres de polyéthylène ultra haute densité pourraient être utilisées au sein d'une même nappe afin de combiner le haut module du carbone et la haute ténacité du Polyéthylène très haute densité. Encore selon un autre exemple, de l'aluminium pourrait être utilisé pour réaliser la structure nid d'abeille.

Par ailleurs, les fibres, telles que le Vectran®, le PET ou les fibres de verre, peuvent recevoir une coloration dans la masse lors de leur fabrication de manière à obtenir un aspect esthétique particulier, on peut par exemple imaginer des fibres colorées permettant de contraster avec la matrice injectée dans les cellules et ainsi mieux faire ressortir la structure nid d'abeille. On peut également imaginer une alternance de la couleur des fibres au sein d'une même nappe de fibres.

De manière à renforcer la structure nid d'abeille, une matrice, de type résine thermodurcissable, est choisie en fonction des propriétés souhaitées et est injectée dans les cellules de la structure nid d'abeille. Cette résine peut être une résine époxy, une résine acrylique, une résine polyuréthane ou une résine polysiloxane. Selon une variante préférée de l'invention, les nappes unidirectionnelles sont pré-imprégnées en appliquant la résine sur les filaments avant de superposer les couches les unes sur les autres.

Il est à noter que par le terme matrice, on entend une matière qui va enrober et recouvrir tout ou partie du renfort en nid d'abeille.

Dans le cas d'une structure nid d'abeille en matériau métallique, de manière à favoriser l'adhésion de la matrice, les feuilles minces en matériau métallique utilisées pour former la structure nid d'abeille peuvent être micro-perforées de telle façon que la résine injectée dans les cellules pénètre les feuilles minces en matériau métallique formant les cellules et ainsi augmente la ténacité et la durabilité de l'assemblage. Selon une variante de l'invention, les feuilles minces en matériau métallique peuvent être texturées par microbillage ou par calandrage ou par attaque chimique ou par laser en surface pour que la résine adhère mieux aux feuilles minces en matériau métallique formant les cellules.

Selon un mode de réalisation particulier de l'invention, la résine peut comprendre des charges de nanotubes de carbone ou encore des charges de nano-diamants à base de carbure de silicium par exemple, de manière à augmenter les modules de traction ou de flexion ou pour améliorer la résistance à la rayure. Par exemple, un ajout de 0,5% à 1,5% de charges de nano-diamants permet d'augmenter la dureté du matériau, ce qui accroit la résistance du composant horloger aux rayures et frottements.

La résine peut également comprendre des charges colorées et/ou photoluminescentes de type oxydes d'alcalino-terreux dopés avec un ou plusieurs lanthanides de manière à conférer un aspect esthétique particulier au composant horloger lorsque la luminosité ambiante baisse. Selon cette variante particulièrement avantageuse, la matière des fibres est transparente comme la fibre de verre et possède un indice de réfraction sensiblement égal à celui de la résine. Par exemple, on choisira idéalement de combiner la fibre de verre et la résine acrylique qui ont toutes les deux un indice de réfraction de 1,5.

Selon une autre variante, les pigments phosphorescents peuvent être combinés avec des fluorophores spécifiques afin d'obtenir différents couples de couleur jour/nuit.

Grâce à ces différents aspects de l'invention, on dispose d'un composant en matériau composite robuste pouvant présenter un aspect esthétique particulier.

L'invention concerne également un procédé de réalisation d'un composant horloger en matériau composite, le matériau composite comprenant au moins un renfort et une matrice, le renfort se présentant sous la forme d'une structure en nid d'abeille en trois dimensions avec une pluralité de cellules dans lesquelles est injectée la matrice.

Lors de la première étape, on réalise le renfort présentant une structure nid d'abeille et on peut éventuellement le découper selon une forme souhaitée, par exemple la forme d'une boite de montre.

Ensuite, on place le renfort dans un moule ayant la forme du composant souhaité, on ferme le moule et on injecte la matrice dans le moule à une température T et une pression P de manière à solidariser la résine à la structure par le biais d'une étape de polymérisation ou de réticulation de la résine sous pression et selon un cycle de température prédéterminée.

Après refroidissement et maintien à une pression P, le composant obtenu peut être repris en usinage/polissage pour assurer une bonne finition du composant.

Un tel procédé permet de fabriquer des pièces d'horlogerie en matériau composite conforme à l'invention. Ainsi, des boites de montre, des cadrans, des platines, des ponts, des lunettes, ou encore des rehauts voire des maillons peuvent être fabriqués.

Un tel matériau est particulièrement intéressant pour fournir des pièces d'horlogerie particulièrement légères, très résistantes, et alliant un aspect esthétique particulier dû à la structure nid d'abeille ce qui permet de se démarquer des matériaux composites classiques.

A titre d'exemple illustratif et non limitatif, une boîte de montre et son fond, visibles à la figure 2a et 2b, peuvent être réalisée à partir d'une structure nid d'abeille en fibres de carbone avec une résine époxy chargée avec 1% de nano-diamants, la boîte de montre et le fond combineraient les avantages de ténacité, d'amortissement des chocs, de résistance aux rayures et de légèreté particulièrement recherchés dans l'horlogerie.

Bien entendu, la présente invention ne se limite pas à l'exemple illustré et est susceptible de diverses variantes et modifications qui apparaîtront à l'homme de l'art.

## Revendications

1. Elément d'habillage d'une pièce d'horlogerie en matériau composite comprenant au moins un renfort et une matrice, le renfort présentant une structure en nid d'abeille en trois dimensions avec une pluralité d'alvéoles dans lesquelles est injectée la matrice, **caractérisé en ce que** les alvéoles ont une longueur comprise entre 0.5mm et 2mm.

2. Elément d'habillage d'une pièce d'horlogerie selon la revendication 1, dans lequel le renfort présentant une structure en nid d'abeille est réalisé au moyen d'un matériau choisi parmi les fibres synthétiques, les fibres naturelles, les métaux y compris sous leurs formes amorphes, les céramiques, et les thermoplastiques.

3. Elément d'habillage d'une pièce d'horlogerie selon la revendication 1 ou 2, dans lequel la matrice est choisie parmi les résines thermodurcissables de la famille des polyépoxydes, de la famille des acryliques, de la famille des polyuréthanes ou de la famille des thermoplastiques comme les polyetherketones ou les polyamides, les polyuréthanes, les polyoléfines ou encore de la famille des élastomères comme les polysiloxanes.

4. Elément d'habillage d'une pièce d'horlogerie selon l'une des revendications 1 à 3, dans lequel la matrice comprend un additif parmi des colorants, des pigments phosphorescents et/ou fluorescents, de la silice, des charges de nanotubes de carbone ou encore des charges de nano-diamants.

5. Elément d'habillage d'une pièce d'horlogerie selon la revendication 4, dans lequel la matrice comprend une combinaison d'au moins deux additifs.

6. Elément d'habillage d'une pièce d'horlogerie selon l'une des revendications 1 à 5, dans lequel les alvéoles sont de forme hexagonale.

7. Elément d'habillage d'une pièce d'horlogerie selon l'une des revendications 1 à 6, dans lequel la hauteur des alvéoles est de 0.5mm à 2mm.

8. Procédé de fabrication d'un élément d'habillage d'une pièce d'horlogerie en structure composite à nid d'abeille selon l'une des revendications 1 à 7, comportant les étapes suivantes :
- former le renfort selon la revendication 1,
- placer le renfort dans un moule,
- fermer le moule et injecter la matrice selon la revendication 1 dans le moule à une température T et une pression P,
- maintenir le moule fermé à la pression P durant le refroidissement,
- extraire le composant formé du moule,
- reprendre le composant en post-traitement par exemple usinage/polissage.

9. Procédé selon la revendication 8, dans lequel le renfort présentant une structure nid d'abeille est réalisé au moyen d'un matériau choisi parmi les fibres synthétiques, les fibres naturelles, les métaux y compris sous leur forme amorphe, les céramiques, et les thermoplastiques.

10. Procédé selon la revendication 8, dans lequel la matrice est choisie parmi les résines thermodurcissables de la famille des polyépoxydes, de la famille des acryliques, de la famille des polyuréthanes ou encore de la famille des polysiloxanes.

11. Procédé selon l'une des revendications 8 à 10, dans lequel la matrice comprend un additif parmi des colorants, des pigments phosphorescents ou fluorescents, de la silice, des charges de nanotubes de carbone ou encore des charges de nano-diamants.

12. Procédé selon la revendication 11, dans lequel la matrice comprend une combinaison d'au moins deux additifs.

## Patentansprüche

1. Verkleidungselement einer Uhr aus Verbundstoff, umfassend mindestens eine Verstärkung und eine Matrix, wobei die Verstärkung eine dreidimensionale Bienenwabenstruktur mit einer Vielzahl von Waben aufweist, in welche die Matrix eingespritzt ist, **dadurch gekennzeichnet, dass** die Waben eine Länge zwischen 0,5 mm und 2 mm haben.

2. Verkleidungselement einer Uhr nach Anspruch 1, wobei die Verstärkung, die eine Bienenwabenstruktur aufweist, mittels eines Materials hergestellt ist, das aus den synthetischen Fasern, den Naturfasern, die Metallen inklusive in ihren amorphen Formen, den Keramiken und den Thermoplasten ausgewählt ist.

3. Verkleidungselement einer Uhr nach Anspruch 1 oder 2, wobei die Matrix aus den thermisch härtbaren Harzen aus der Familie der Polyepoxide, der Familie der Acryle, der Familie der Polyurethane oder der Familie der Thermoplaste wie den Polyetherketonen oder den Polyamiden, den Polyurethanen, den Polyolefinen oder auch der Familie der Elastomere wie den Polysiloxanen ausgewählt ist.

4. Verkleidungselement einer Uhr nach einem der Ansprüche 1 bis 3, wobei die Matrix ein Additiv aus den Farbstoffen, den phosphoreszierenden und/oder fluoreszierenden Pigmenten, Siliciumdioxid, den Kohlenstoff-Nanoröhrchen-Zusätzen oder auch den Nanodiamant-Zusätzen umfasst.

5. Verkleidungselement einer Uhr nach Anspruch 4, wobei die Matrix eine Kombination aus mindestens zwei Additiven umfasst.

6. Verkleidungselement einer Uhr nach einem der Ansprüche 1 bis 5, wobei die Waben eine sechseckige Form haben.

7. Verkleidungselement einer Uhr nach einem der Ansprüche 1 bis 6, wobei die Höhe der Waben 0,5 mm bis 2 mm beträgt.

8. Verfahren zur Herstellung eines Verkleidungselements einer Uhr aus Bienenwaben-Verbundstruktur nach einem der Ansprüche 1 bis 7, aufweisend die folgenden Schritte:
- Bilden der Verstärkung nach Anspruch 1,
- Platzieren der Verstärkung in eine Form,
- Schließen der Form und Einspritzen der Matrix nach Anspruch 1 in die Form bei einer Temperatur T und einem Druck P,
- Geschlossenhalten der Form bei dem Druck P während der Abkühlung,
- Herausnehmen der geformten Komponente aus der Form,
- Nachbehandeln der Komponente beispielsweise durch Bearbeiten/Polieren.

9. Verfahren nach Anspruch 8, wobei die Verstärkung, die eine Bienenwabenstruktur aufweist, mittels eines Materials hergestellt ist, das aus den synthetischen Fasern, den Naturfasern, die Metallen inklusive in ihrer amorphen Form, den Keramiken und den Thermoplasten ausgewählt ist.

10. Verfahren nach Anspruch 8, wobei die Matrix aus den thermisch härtbaren Harzen aus der Familie der Polyepoxide, der Familie der Acryle, der Familie der Polyurethane oder auch der Familie der Polysiloxane ausgewählt ist.

11. Verfahren nach einem der Ansprüche 8 bis 10, wobei die Matrix ein Additiv aus den Farbstoffen, den phosphoreszierenden und/oder fluoreszierenden Pigmenten, Siliciumdioxid, den Kohlenstoff-Nanoröhrchen-Zusätzen oder auch den Nanodiamant-Zusätzen umfasst.

12. Verfahren nach Anspruch 11, wobei die Matrix eine Kombination aus mindestens zwei Additiven umfasst.

## Claims

1. External timepiece element made of composite material including at least one reinforcement and one matrix, the reinforcement having a three-dimensional honeycomb structure with a plurality of cells into which the matrix is injected, **characterised in that** the cells have a length comprised between 0.5mm and 2mm.

2. External timepiece element according to claim 1, wherein the reinforcement having a honeycomb structure is made using a material chosen from synthetic fibres, natural fibres, metals including amorphous forms of metal, ceramics and thermoplastics.

3. External timepiece element according to claim 1 or 2, wherein the matrix is chosen from thermosetting resins from the family of polyepoxides, from the family of acrylics, from the family of polyurethanes or the family of thermoplastics, such as polyetherketones or polyamides, polyurethanes, polyolefins, or from the family of elastomers such as polysiloxanes.

4. External timepiece element according to any of claims 1 to 3, wherein the matrix includes an additive from among colorants, phosphorescent and/or fluorescent pigments, silica, carbon nanotube fillers or nanodiamond fillers.

5. External timepiece element according to claim 4, wherein the matrix includes a combination of at least two additives.

6. External timepiece element according to any of claims 1 to 5, wherein the cells are hexagonal in shape.

7. External timepiece element according to any of claims 1 to 6, wherein the height of the cells is from 0.5mm to 2mm.

8. Method for fabricating an external timepiece element in a composite honeycomb structure according to any of claims 1 to 7, including the following steps:
- forming the reinforcement according to claim 1,
- placing the reinforcement inside a mould,
- closing the mould and injecting the matrix according to claim 1 into the mould at a temperature T and a pressure P,
- keeping the mould closed at pressure P during cooling,
- removing the component formed from the mould,
- subjecting the component to post-treatment for example machining/polishing.

9. Method according to claim 8, wherein the reinforcement having a honeycomb structure is made using a material chosen from synthetic fibres, natural fibres, metals including amorphous forms of metal, ceramics and thermoplastics.

10. Method according claim 8, wherein the matrix is chosen from thermosetting resins from the family of polyepoxides, from the family of acrylics, from the family of polyurethanes or from the family of polysiloxanes.

11. Method according to any of claims 8 to 10, wherein the matrix includes an additive from among colorants, phosphorescent or fluorescent pigments, silica, carbon nanotube fillers or nanodiamond fillers.

12. Method according to claim 11, wherein the matrix includes a combination of at least two additives.
